# EUROPEAN PATENT SPECIFICATION

(11) **EP 3 168 028 B1**
(45) Date of publication and mention of the grant of the patent: **29.04.2020**
(21) Application number: 16197700.4
(22) Date of filing: 08.11.2016
(51) Int. Cl.: B29C 45/76

(54) **INJECTION MOLDING INFORMATION MANAGEMENT DEVICE AND INJECTION MOLDING MACHINE**
SPRITZGIESSINFORMATIONSVERWALTUNGSVORRICHTUNG UND SPRITZGIESSMASCHINE
DISPOSITIF DE GESTION D'INFORMATIONS DE MOULAGE PAR INJECTION ET MACHINE DE MOULAGE PAR INJECTION

(30) Priority: 11.11.2015 JP 2015221270
(43) Date of publication of application: 17.05.2017
(73) Proprietor: SUMITOMO HEAVY INDUSTRIES, LTD., Tokyo 141-6025 (JP)
(72) Inventor: MORITA, Hiroshi, Chiba-shi, Chiba 263-0001 (JP); ABE, Masahiro, Chiba-shi, Chiba 263-0001 (JP); SHIBATA, Tatsuya, Chiba-shi, Chiba 263-0001 (JP); HOTTA, Daigo, Chiba-shi, Chiba 263-0001 (JP)
(74) Representative: Louis Pöhlau Lohrentz

(56) References cited:
- DE-B3-102006 033 421
- JP-A- H0 788 908
- US-A1- 2004 080 067

## Description

### BACKGROUND OF THE INVENTION

### Field of the Invention

The present invention relates to an injection molding information management device and an injection molding machine.

Priority is claimed to Japanese Patent Application No. 2015-221270, filed November 11, 2015.

### Description of Related Art

In an injection molding machine disclosed in Japanese Unexamined Patent Application Publication No. 9-262889, a mean load factor per one molding cycle is calculated from an instantaneous current value and an instantaneous voltage value of each motor, the mean load factor and a reference mean load factor under predetermined mold conditions are compared with each other, and when the difference therebetween exceeds an allowable value, an alarm is issued.

United States Patent Application US 2004-0080067 A1 discloses a method of detecting a malfunction during a die clamping step in an injection molding machine. The die clamping force is monitored in monitoring sections during a die clamping step and, when its value exceeds an allowable limit value, it is decided that a malfunction occurs and an alarm is issued.

German Patent Application DE 10 2006 033421 B3 discloses an injection molding machine with a sensor comprising a processing unit that categorizes signals received from a probe by comparison with a classification table and sends an error signal to a control unit if a defect is detected. The JP H0788908 discloses an injection control of injection moulder - where initial condition of screw switching position is set and switching of filling pressure occurs when target value is attained.

In the related art, when a value indicating a load exceeds an allowable value, it is understood that a load state is abnormal. However, the detection accuracy with respect to an abnormality is not sufficient.

### SUMMARY OF THE INVENTION

The present invention is made in consideration of the above-described problem, and a main object thereof is to provide an injection molding information management device in which an abnormality of a part used in injection molding can be accurately detected.

In order to achieve the above-described object, according to an aspect of the present invention, there is provided an injection molding information management device which manages information of a part of an injection molding machine, in which the inj ectionmolding information management device is configured to calculate a difference between result values of a physical quantity indicating a load applied to the part at an nth (n is a natural number of 2 or more) shot and an mth (m is a natural number which is obtained by subtracting a predetermined positive natural number from n and is 1 or more) shot, in a cyclical operation in which a molding product is repeatedly manufactured under the same setting conditions.

According to the aspect of the present invention, an injection molding information management device in which an abnormality of a part used in injection molding can be accurately detected is provided.

### BRIEF DESCRIPTION OF THE DRAWINGS

Fig. 1 is a view showing a state when mold opening of an injection molding machine according to an embodiment is completed.
Fig. 2 is a view showing a state when a mold of the injection molding machine according to the embodiment is clamped.
Fig. 3 is a diagram showing a transition of degrees of differences between a result value of the physical quantity indicating the load applied to the management part and a reference value according to the embodiment.
Fig. 4 is a view showing a transition of differences between the result values at the nth shot and the mth shot according to the embodiment.

### DETAILED DESCRIPTION OF THE INVENTION

Hereinafter, an embodiment of the present invention is described with reference to the drawings. However, in each drawing, the same or corresponding reference numerals are assigned to the same or corresponding configurations, and descriptions thereof are omitted.

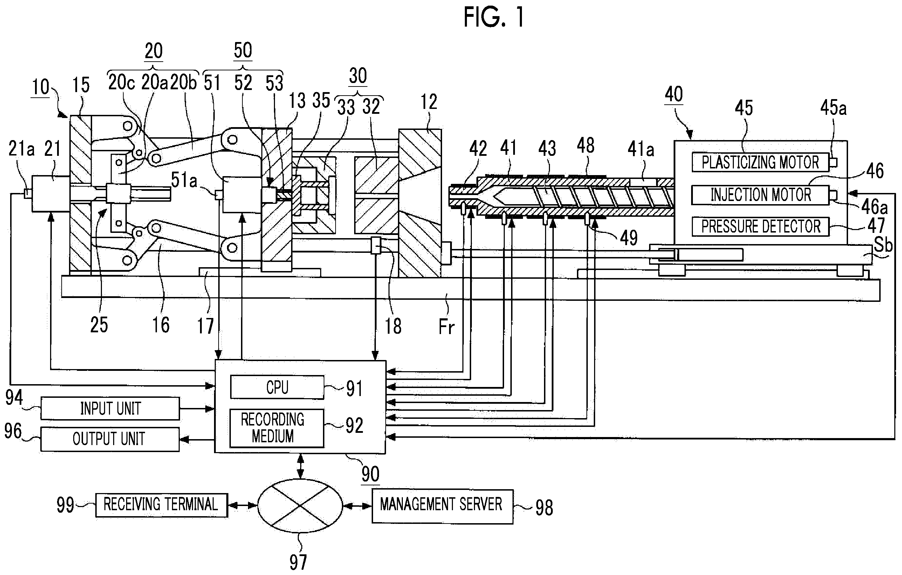

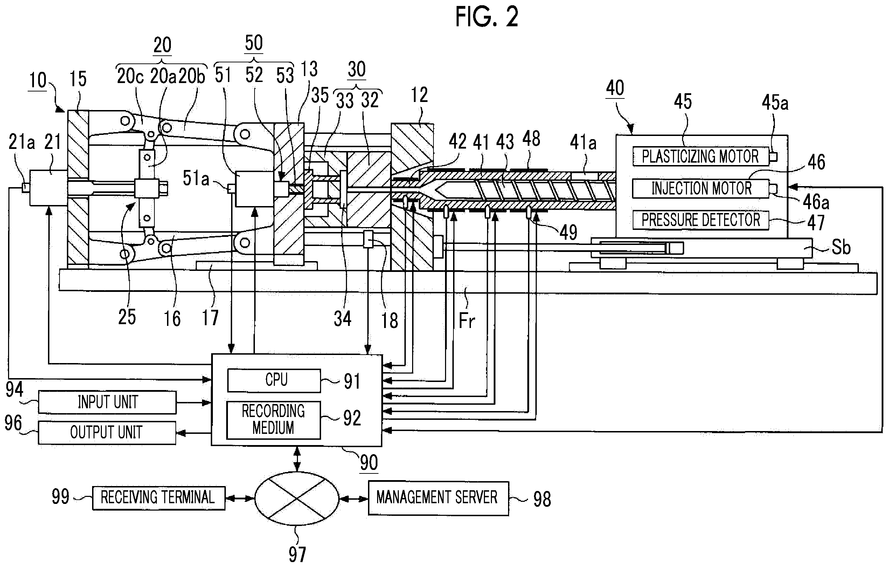

Fig. 1 is a view showing a state when mold opening of an injection molding machine according to an embodiment is completed. Fig. 2 is a view showing a state when a mold of the injection molding machine according to the embodiment is clamped.

As shown in Figs. 1 and 2, for example, the injection molding machines includes a frame Fr, a mold clamping unit 10, an injection unit 40, an ejector unit 50, and a controller 90.

First, the mold clamping unit 10 and the ejector unit 50 are described. In the descriptions of the mold clamping unit 10 or like, a movement direction (right direction in Figs. 1 and 2) of a movable platen 13 when a mold is closed is defined as a front side, and a movement direction (left direction in Figs. 1 and 2) of the movable platen 13 when the mold is open is defined as a rear side.

The mold clamping unit 10 performs mold-closing, mold-clamping, and mold-opening of a mold unit 30. The mold clamping unit 10 includes a stationary platen 12, the movable platen 13, a support platen 15, a tie bar 16, a toggle mechanism 20, a mold clamping motor 21, and a movement conversion mechanism 25.

The stationary platen 12 is fixed to the frame Fr. A stationary mold 32 is attached to a surface of the stationary platen 12 facing the movable platen 13.

The movable platen 13 is movable along a guide (for example, guide rail) 17 which is placed on the frame Fr, and is movable forward and backward with respect to the stationary platen 12. A movable mold 33 is attached to a surface of the movable platen 13 facing the stationary platen 12.

By moving the movable platen 13 forward and backward with respect to the stationary platen 12, opening, clamping, and closing of the mold are performed. The mold unit 30 is configured of the stationary mold 32 and the movable mold 33.

The support platen 15 is connected so as to be separated from the stationary platen 12, and is placed to be movable on the frame Fr in mold opening and closing directions . In addition, the support platen 15 may be movable along a guide which is placed on the frame Fr. The guide of the support platen 15 may be also used as the guide 17 of the movable platen 13.

In addition, in the present embodiment, the stationary platen 12 is fixed to the frame Fr, and the support platen 15 is movable in the mold opening and closing directions with respect to the frame Fr. However, the support platen 15 may be fixed to the frame Fr, and the stationary platen 12 may be movable in the mold opening and closing directions with respect to the frame Fr.

The stationary platen 12 and the support platen 15 are connected to each other at intervals by the tie bar 16. Multiple tie bars 16 may be used. The tie bars 16 are parallel in the mold opening and closing directions, and extend according to a mold clamping force. A mold clamping force detector 18 is provided in at least one tie bar 16. The mold clamping force detector 18 may be a strain gauge type detector, detects the mold clamping force by detecting strain of the tie bar 16, and sends signals indicating detection results to the controller 90.

In addition, the mold clamping force detector 18 is not limited to the strain gauge type detector, and may be a piezoelectric type detector, a capacitance type detector, a hydraulic type detector, an electromagnetic type detector, or the like, and the attachment position of the mold clamping force detector 18 is also not limited to the tie bar 16.

The toggle mechanism 20 is provided between the movable platen 13 and the support platen 15. The toggle mechanism 20 is configured of a crosshead 20a, multiple links 20b and 20c, or the like. One link 20b is attached so as to be oscillated to the movable platen 13 by pins or the like. The other link 20c is attached so as to be oscillated to the support platen 15 by pins or the like. The links 20b and 20c are bendably/strechably connected by pins or the like. By moving the crosshead 20a forward and backward, the multiple links 20b and 20c are bent and stretched, and the movable platen 13 moves forward and backward with respect to the support platen 15.

The mold clamping motor 21 is attached to the support platen 15, moves the crosshead 20a forward and backward, and moves the movable platen 13 forward and backward. The movement conversion mechanism 25, which converts a rotational motion of the mold clamping motor 21 into a linear motion and transmits the linear motion to the crosshead 20a, is provided between the mold clamping motor 21 and the crosshead 20a. For example, the movement conversion mechanism 25 is a ball screw mechanism. For example, the position or the speed of the crosshead 20a is detected by an encoder 21a of the mold clamping motor 21, or the like. Signals indicating the detection results are sent to the controller 90.

The operation of the mold clamping unit 10 is controlled by the controller 90. The controller 90 controls a mold closing process, a mold clamping process, a mold opening process, or the like.

In the mold closing process, by driving the mold clamping motor 21 and moving the crosshead 20a forward at a setting speed, the movable platen 13 moves forward, and the movable mold 33 comes into contact with the stationary mold 32.

In the mold clamping process, by further driving the mold clamping motor 21, a mold clamping force is generated. When the mold is clamped, a cavity space 34 is formed between the movable mold 33 and the stationary mold 32, and the cavity space 34 is filled with a liquid molding material. The molding material filling the cavity space 34 is solidified to obtain a molding product. Multiple cavity spaces 34 may be used, and in this case, multiple molding products can be simultaneously obtained.

In the mold opening process, by driving the mold clamping motor 21 and moving the crosshead 20a backward at a setting speed, the movable platen 13 moves backward, and the movable mold 33 is separated from the stationary mold 32.

In addition, the mold clamping unit 10 of the present embodiment has the mold clamping motor 21 as a drive source. However, instead of the mold clamping motor 21, the mold clamping unit 10 may have a hydraulic cylinder. Moreover, the mold clamping unit 10 may have a linear motor for opening and closing a mold, and may have an electromagnet for clamping a mold.

In addition, the mold clamping unit 10 of the present embodiment is a horizontal type mold clamping unit in which the mold opening and closing directions are the horizontal direction. However, the mold clamping unit 10 may be a vertical type mold clamping unit in which the mold opening and closing directions are the vertical direction.

The ejector unit 50 ejects a molding product from the mold unit 30. The ejector unit 50 includes an ejector motor 51, a movement conversion mechanism 52, and an ejector rod 53.

The ejector motor 51 is attached to the movable platen 13 . The ejector motor 51 is directly attached to the movement conversion mechanism 52. However, the ejector motor 51 may be connected to the movement conversion mechanism 52 via a belt, pulley, or the like.

The movement conversion mechanism 52 converts a rotational motion of the ejector motor 51 into a linear motion of the ejector rod 53. For example, the movement conversion mechanism 52 is configured of a ball screw mechanism or the like.

The ejector rod 53 is movable forward and backward in a through hole of the movable platen 13. The front end section of the ejector rod 53 comes into contact with the movable member 35 which is disposed to be movable forward and backward in the movable mold 33. In addition, the ejector rod 53 may be connected to the movable member 35.

The operation of the ejector unit 50 is controlled by the controller 90. The controller 90 controls an ejection process or the like.

In the ejection process, by driving the ejector motor 51 and moving the ejector rod 53 forward, the movable member 35 moves forward, and a molding product is ejected. Thereafter, by driving the ejector motor 51 and moving the ejector rod 53 backward, the movable member 35 moves backward to the original position. For example, the position or the speed of the ejector rod 53 is detected by an encoder 51a of the ejector motor 51. Signals indicating the detection results are sent to the controller 90.

Next, the injection unit 40 is described. Different from the descriptions of the mold clamping unit 10, in descriptions of the injection unit 40, a movement direction (left direction in Figs. 1 and 2) of a screw 43 during filling is referred to as a front side, and a movement direction (right direction in Figs. 1 and 2) of the screw 43 during plasticizing is referred to as a rear side.

The injection unit 40 is installed on a slide base Sb which is movable forward and backward with respect to the frame Fr, and is movable forward and backward with respect to the mold unit 30. The injection unit 40 is touched on the mold unit 30, and fills the inner portion of the mold unit 30 with the molding material.

For example, the injection unit 40 includes a cylinder 41, a nozzle 42, the screw 43, a plasticizing motor 45, an injection motor 46, and a pressure detector 47.

The cylinder 41 heats the molding material which is supplied from a supply port 41a to the inner portion of the cylinder 41. The supply port 41a is formed on the rear portion of the cylinder 41. A heat source 48 such as a heater and a temperature detector 49 are provided on the outer periphery of the cylinder 41.

The cylinder 41 is divided into multiple zones in an axial direction (right-left direction in Figs. 1 and 2) of the cylinder 41. The heat source 48 and the temperature detector 49 are provided in each zone. The controller 90 controls the heat source 48 such that a temperature which is actually measured by the temperature detector 49 becomes a setting temperature for each zone.

The nozzle 42 is provided on the front end section of the cylinder 41 and is pressed by the mold unit 30. The heat source 48 such as a heater and the temperature detector 49 are provided on the outer periphery of the nozzle 42. The controller 90 controls the heat source 48 such that an actually measured temperature of the nozzle 42 becomes a setting temperature.

The screw 43 is disposed to be rotatable and to be movable forward and backward in the cylinder 41.

The plasticizing motor 45 rotates the screw 43 to feed the molding material forward along spiral grooves of the screw 43. The molding material is gradually melted by heat from the cylinder 41 while being fed forward. The liquid molding material is fed to the front portion of the screw 43 and is accumulated in the front portion of the cylinder 41, and thus, the screw 43 moves backward.

The injection motor 46 moves the screw 43 forward and backward. The injection motor 46 moves the screw 43 forward, and thus, the liquid molding material accumulated in the front side of the screw 43 is injected from the cylinder 41, and the inner portion of the mold unit 30 is filled with the liquid molding material. Thereafter, the injection motor 46 presses the screw 43 forward, and applies a pressure to the molding material inside the mold unit 30. Accordingly, insufficient molding materials can be replenished. A movement conversion mechanism which converts a rotational motion of the injection motor 46 into a liner motion of the screw 43 is provided between the injection motor 46 and the screw 43. For example, this movement conversion mechanism is configured of a ball screw mechanism.

For example, the pressure detector 47 is disposed between the injection motor 46 and the screw 43, and detects a pressure which is applied from the molding material to the screw 43, a back pressure with respect to the screw 43, or the like. The pressure which is applied from the molding material to the screw 43 corresponds to the pressure which is applied from the screw 43 to the molding material. The pressure detector 47 sends signals indicating the detection results to the controller 90.

The operation of the injection unit 40 is controlled by the controller 90. The controller 90 controls a filling process, a holding pressure process, a plasticizing process, or the like.

In the filling process, the injection motor 46 is driven so as to move the screw 43 forward at a setting speed, and the inner portion of the mold unit 30 is filled with the liquid molding material accumulated in the front side of the screw 43. For example, the position or the speed of the screw 43 is detected by an encoder 46a of the injection motor 46, or the like. Signals indicating the detection results are sent to the controller 90. If the position of the screw 43 reaches a predetermined position, switching from the filling process to the holding pressure process (so called V/P switching) is performed. The setting speed of the screw 43 may be changed according to the position of the screw 43, time, or the like.

In addition, in the filing process, after the position of the screw 43 reaches a predetermined position, the screw 43 may temporarily stop at the predetermined position, and thereafter, the V/P switching may be performed. Immediately before the V/P switching, instead of stopping the screw 43, the screw 43 may move forward or may move backward at a very slow speed.

In the holding pressure process, the injection motor 46 is driven so as to press the screw 43 forward at a setting pressure, and a pressure is applied to the molding material inside the moldunit 30. Insufficient molding materials can be replenished. For example, the pressure of the molding material is detected by the pressure detector 47. Signals indicating the detection results are sent to the controller 90.

In the holding pressure process, the molding material inside the mold unit 30 is gradually cooled, and when the holding pressure process is completed, the inlet of the cavity space 34 is closed by the solidified molding material. This state is referred to as a gate seal, and a backflow of the molding material from the cavity space 34 is prevented. After the holding pressure process, a cooling process starts. In the cooling process, solidification of the molding material inside the cavity space 34 is performed. In order to shorten a molding cycle, the plasticizing process may be performed during the cooling process.

In the plasticizing process, the plasticizing motor 45 is driven so as to rotate the screw 43 at a setting rotating speed, and the screw 43 feeds the molding material forward along the spiral grooves of the screw 43. According to this, the molding material is gradually melted. The screw 43 moves backward as the liquid molding material is fed to the front side of the screw 43 and is accumulated in the front portion of the cylinder 41. For example, the rotating speed of the screw 43 is detected by an encoder 45a of the plasticizing motor 45. Signals indicating the detection results are sent to the controller 90.

In the plasticizing process, in order to restrict an abrupt rearward movement of the screw 43, the injection motor 46 may be driven so as to apply a setting back pressure to the screw 43. For example, the back pressure with respect to the screw 43 is detected by the pressure detector 47. Signals indicating the detection results are sent to the controller 90. If the screw 43 moves backward to the predetermined position and a predetermined amount of the molding materials is accumulated in the front side of the screw 43, the plasticizing process ends.

Moreover, the injection unit 40 of the present embodiment is an inline-screw type injection unit. However, the injection unit 40 may be a pre-plasticizing type injection unit. In the pre-plasticizing type injection unit, a molding material melted in a plasticization cylinder is supplied to the injection cylinder, and the molding material is injected from the injection cylinder to a mold unit. A screw is disposed in the plasticization cylinder to be rotatable or to be rotatable and movable forward and backward, and a plunger is disposed in the injection cylinder to be movable forward and backward.

As shown in Figs. 1 and 2, the controller 90 includes a central processing unit (CPU) 91, and a recording medium 92 such as a memory. By carrying out a program stored in the recording medium 92 using the CPU 91, the controller 90 controls the mold clamping unit 10, the injection unit 40, the ejector unit 50, or the like.

For example, the controller 90 performs a cyclical operation in which molding products are repeatedly manufactured under the same setting conditions. For example, in the cyclical operation, a series of processes such as the mold closing process, the mold clamping process, the filling process, the holding pressure process, the cooling process, the mold opening process, or the ejection process are repeatedly performed. As the setting conditions, conditions which are input by an input unit 94 or like and are stored in a recording medium 92 are read to be used. For example, a touch panel is used as the input unit 94. The touch panel also serves as an output unit 96 described below.

The controller 90 also serves as an information management device which manages information of parts used in injection molding. In addition, the controller 90 and the information management device may be separately provided from each other. The information management device may acquire information from the controller 90 via a network 97 such as an internet line. Instead of the network 97, a portable information recording medium may be also used.

The part (hereinafter, referred to as a "management part") in which information is managed by the controller 90 may be any one as long as a load is applied to it when the injection molding is performed. The management part may be any part of the mold clamping unit 10, the mold unit 30, the injection unit 40, the ejector unit 50, and the like. One management part may be used, or multiple management parts may be used. Each management part maybe configured of one component, or may be configured of multiple components. For example, a unit configured of multiple components may be treated as one management part.

The controller 90 manages a physical quantity indicating a load applied to the management part when the cycle is performed. For example, as the physical quantity indicating the load, at least one selected from a force, a pressure, torque, a temperature, a current, a movement distance (for example, a rotation movement distance or a linear movement distance), and a load time is singularly used, or combination thereof is used. In the combination, one or more of addition, subtraction, multiplication, and division may be used. For example, the combination includes multiplication between the force and the movement distance, multiplication between the force and the load time, division between the movement distance and the load time (that is, speed), or the like. Among the physical quantity, the physical quantity according to the kind of the management part is adopted. Multiple kinds of physical quantities may be adopted with respect to one management part. In addition, the value of the physical quantity indicating the load may be a positive value, and the value of the physical quantity may increase as the load increases.

For example, in a case where the management part is a sliding part of the mold clamping unit 10, as the physical quantity indicating the load, at least one selected from a friction force, a sliding distance, and a load time is singularly used, or combination thereof is used. Since the friction force is proportional to the mold clamping force, the mold clamping force may be used instead of the friction force. The sliding part of the mold clamping unit 10 includes a pin of the toggle mechanism 20, a ball screw mechanism serving as a movement conversion mechanism, a bearing, or the like. The bearing may be any one of a sliding bearing such as a bush or a rolling bearing.

In a case where the management part is a structural part of the mold clamping unit 10, as the physical quantity indicating the load, at least one selected from the molding clamping force and the load time is singularly used, or combination thereof is used. The structural part of the mold clamping unit 10 includes the stationary platen 12, the movable platen 13, the support platen 15, the tie bar 16, or the like.

In a case where the management part is the structural part of the mold unit 30, as the physical quantity indicating the load, at least one selected from the mold clamping force and the load time is singularly used, or combination thereof is used. In a case where the management part is a heater which is built in the mold unit 30, as the physical quantity indicating the load, at least one selected from the mold clamping force, the current, and the load time is singularly used, or combination thereof is used.

In a case where the management part is a heater of the injection unit 40, as the physical quantity indicating the load, at least one selected from the current and the load time is singularly used, or combination thereof is used.

In a case where the management part is the screw 43 of the injection unit 40, as the physical quantity indicating the load, at least one selected from the sliding distance (for example, reciprocation movement distance in forward and rearward directions), the pressure, the torque, and the load time is singularly used, or combination thereof is used.

In a case where the management part is the mold clamping motor 21, the plasticizing motor 45, the injection motor 46, the ejector motor 51, or the like, as the physical quantity indicating the load, the toque, the load time, or the like is adopted. Since the torque corresponds to the current, the current may be used instead of the torque.

The controller 90 detects a result value of the physical quantity indicating the load by a detector or the like mounted on the injection molding machine. As the detector, a general detector which is mounted on the injection molding machine is used. For example, specifically, the detector includes a load detector, a pressure detector, a torque detector, a current detector, atimer, a position detector, a rotation angle detector, a temperature detector, or the like.

The controller 90 manages the result value (hereinafter, simply referred to as a "result value") of the physical quantity indicating the load applied to the management part for each shot in the cyclical operation. For example, in an one-time shot, a series of processes including the mold closing process, the mold clamping process, the filling process, the holding process, the cooling process, the mold opening process, the ejection process, or the like are performed.

The controller 90 may detect abnormality of the management part based on the result value every time for each short.

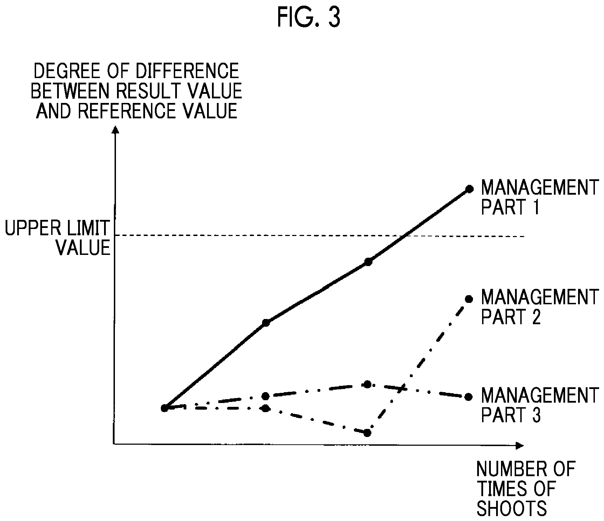

Fig. 3 is a diagram showing a transition of degrees of differences between the result value of the physical quantity indicating the load applied to the management part and a reference value according to the embodiment. In Fig. 3, a horizontal axis indicates the number of times of shots, and a vertical axis indicates the degree (absolute value) of difference between the result value and the reference value. The degree is a ratio of an allowable range with respect to an upper limit value, and the degree is indicated for each management part.

In a case where the degree of difference between the result value and the reference value is within the allowable range, since the load is within a range of standard of the management part, the controller 90 determines that serve abnormality is not present in the management part. Meanwhile, the degree of difference between the result value and the reference value is not within the allowable range, since the load is deviated from the range of standard of the management part, the controller 90 determines that severe abnormality is present in the management part.

In addition, in the determination with respect to presence or absence of the severe abnormality, the degree of difference between the result value and the reference value may not be used, and the difference itself may be used. In addition, the allowable range may include both the upper limit value and the lower limit value, and may include any one of both.

The result value which is used to determine the presence or absence of severe abnormality may include any one of a peak value, an average value, a pattern, or the like. The reference value or the allowable range used to determine the presence or absence of the severe abnormality is obtained by an endurance test of the management part for each management part in advance, and the reference value or the allowable range stored in the recording medium 92 is read to be used. In addition, the reference value which is used to determine the presence or absence of the severe abnormality may be the result value at the time of shipping of the injection molding machine.

In a case where severe abnormality is not present, slight abnormality may be present. The slight abnormality may appear as a symptom of the serve abnormality.

The controller 90 calculates a difference between the result values at a nth (n is a natural number of 2 or more) shot and a mth (m is a natural number which is obtained by subtracting a predetermined positive natural number from n and is 1 or more) shot. The "predetermined positive natural number" may be constant of 1 or more, and may be a function of n. For example, when n proceeds by k (k is a natural number of 2 or more), m may increase by k, and m may be a discontinuous number. As n increases, m may increase continuously or in step.

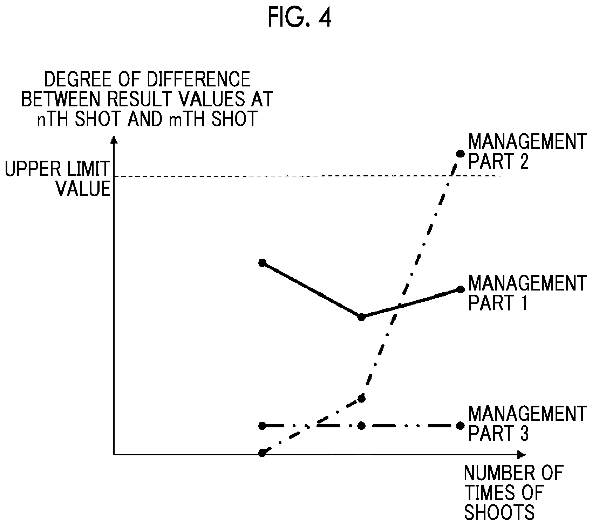

Fig. 4 is a view showing a transition of differences between the result values at the nth shot and the mth shot according to the embodiment. In Fig. 4, a horizontal axis indicates the number of times of shots, and a vertical axis indicates the degree of difference between the result values at the nth shot and the mth shot. The degree is a ratio of the allowable range with respect to the upper limit value, and the degree is indicated for each management part. In Fig. 4, the degree of difference between the result value at the current shot and the result value at the immediately previous shot is calculated every short and is shown. That is, m is n-1 in Fig. 4. In addition, it is not necessary to calculate and/or display the degree of difference between the result values every short, and the degree of difference between the result values may be calculated and/or displayed for a predetermined number of shots.

In a case where the degree of difference between the result values at the nth shot and the mth shot is within an allowable range, since variation in loads is within an error range, the controller 90 determines that slight abnormality is not present in the management part. Meanwhile, in a case where the degree of difference between the result values at the nth shot and the mth shot is not within the allowable range, since variation in loads is deviated from the error range, the controller 90 determines that slight abnormality is present in the management part.

In addition, in the determination with respect to presence or absence of the slight abnormality, the degree of difference between the result values at the nth shot and the mth shot is not used, and the difference itself may be used. In addition, the allowable range may include both the upper limit value and the lower limit value, and may include any one of both.

The result value which is used to determine the presence or absence of slight abnormality may include any one of a peak value, an average value, a pattern, or the like. The allowable range used to determine the presence or absence of the slight abnormality is obtained by an endurance test or the like of the management part for each management part in advance, and the allowable range stored in the recording medium 92 is read to be used.

In a case where slight abnormality occurs, if severe abnormality does not occur and the symptom of the severe abnormality occurs, the cyclical operation may be continued. Thereafter, in a case where severe abnormality occurs, the cyclical operation is stopped, and failed part is repaired or replaced.

The location at which abnormally is detected and the location at which failure occurs may be the same as each other and may be different from each other. Accordingly, the part in which abnormality is detected and the part in which replacement is performed may be the same as each other or may be different from each other.

For example, the physical quantity which is used to detect abnormality includes a controlled variable which is controlled by the controller 90. The result value of the controlled variable is controlled to be a setting value. Accordingly, the difference between the result values of the controlled variables at the nth shot and the mth shot is within an allowable range at the time of a normal state. However, the difference is deviated from the allowable range at the time of an abnormal state.

In general, the controlled variable used here may include the amount of control input to a setting screen. For example, the controlled variable includes the molding clamping force or an applying time of the mold clamping force in the mold clamping process, the pressure of the molding material or an applying time of the pressure in the holding pressure processing, a back pressure of the screw 43 in the plasticizing process, the torque of the ejector motor 51 in the ejection process, the temperature of the mold unit 30, the temperature of the cylinder 41, or the like.

The physical quantity which is used to detect abnormality includes a manipulated variable which is used for operation by the controller 90. The manipulated variable is an amount which is used for operation by the controller 90 such that the result value of the controlled variable becomes the setting value. Accordingly, the difference between the result values of the manipulated variables at the nth shot and the mth shot is within an allowable range at the time of a normal state. However, the difference is deviated from the allowable range at the time of an abnormal state. The difference between the result values of the manipulated variables is greater than the difference between the result values of the controlled variables, and abnormality is more easily detected by the manipulated variable than the controlled variable.

The manipulated variable used here is selected according to the kind of the controlled variable. For example, in a case where the controlled variable is the speed of the crosshead 20a in the molding closing process or the mold opening process, the manipulated variable is the torque of the mold clamping motor. In a case where the controlled variable is the mold clamping force, the manipulated variable is the torque of the mold clamping motor 21. In addition, in a case where the controlled variable is the forward movement speed of the screw 43 in the filling process and the pressure of the molding material in the holding pressure process, the manipulated variable is the torque of the injection motor 46. Moreover, in a case where the controlled variable is the rotating speed of the screw 43 in the plasticizing process, the manipulated variable is the torque of the plasticizing motor 45. In addition, in a case where the controlled variable is the back pressure of the screw 43 in the plasticizing process, the manipulated variable is the torque of the injection motor 46. Moreover, in a case where the controlled variable is the temperature of the cylinder 41, the manipulated variable is the current of the heater which heats the cylinder 41.

The physical quantity which is used to detect abnormality may include at least one vibration parameter of a vibration amplitude, a vibration frequency, a vibration acceleration. Vibrations are generated by operations of various devices when the cyclical operation is performed. Abnormal vibrations may be generated according to deterioration of the management part. Accordingly, the difference between the result values of the vibration parameters at the nth shot and the mth shot is within an allowable range at a normal state. However, the difference is deviated from the allowable range at the time of an abnormal state. The vibration parameter is detected by a vibration detector such as an acceleration detector.

The physical quantity which is used to detect abnormality may include balances between loads which are simultaneously applied to the multiple management part which are symmetrically disposed to each other. For example, the specific balances include (1) a balance between axial forces applied to four tie bars 16 disposed symmetrically in the vertical direction and the horizontal direction when the mold is clamped, (2) a balance between torque generated in the pair of injection motors 46 symmetrically disposed with the center axis of the cylinder 41 as the center at the time of filling, at the time of holding pressure, or at the time of plasticizing, or the like. For example, this balance is indicated by the degree of the difference between the load applied to a portion (for example, two upper tie bars 16, two right tie bars 16, or right injection motor 46) among the multiple management parts, and the load applied to the remaining portions (for example, two lower tie bars 16, two left tiebarsl6, or left injection motor 46), or the like. Inaddition, the balance may be the difference between the maximum value and the minimum value, a standard deviation, or the like. The balance is held at the time of a normal state. However, unbalance occurs at the time of an abnormal state. Accordingly, the difference between the result values of the balances at the nth shot and the mth shot is within an allowable range at the time of a normal state. However, the difference is deviated from the allowable range at the time of an abnormal state.

In addition, the number of the tie bars 16 is not particularly limited. For example, the number of the tie bars 16 may be three, and may be disposed in rotational symmetry. Moreover, the number of the injection motors 46 is not particularly limited.

The physical quantity which is used to detect abnormality may include a balance between the loads of the part at an outgoing path and a return path. For example, the specific balance includes a balance between the torque of the mold clamping motor at the time of mold closing and at the time of mold opening. For example, this balance is indicated by the difference between the load to the part in the outgoing path and the load to the part in the return path. This balance is held at the time of a normal state. However, unbalance occurs at the time of an abnormal state. Accordingly, the difference between the result values of the balances at the nth shot and the mth shot is within an allowable range at the time of a normal state, and the difference is deviated from the allowable range at the time of an abnormal state.

The controller 90 outputs notification based on the difference between the result values at the nth shot and the mth shot to the output unit 96. An image, sound, or the like is used for the notification. The notification may be related to the presence or absence of abnormality with respect to the management part. A user of the injection molding machine who receives the notification can understand the state of the management part or the like.

For example, in a case where it is determined that abnormality is present in the management part based on the difference between the result values at the nth shot and the mth shot, the controller 90 outputs an alarm to the output unit 96. Since slight abnormality is notified before severe abnormality occurs, a countermeasure such as a replacement part being prepared in advance can be performed. Since a replacement part is prepared before severe abnormality occurs after slight abnormality is notified, it is possible to shorten a storage period of the replacement part, and it is possible to reduce space of the storage location.

The controller 90 may output an image (for example, an image shown in Fig. 4), which indicates a relationship between the difference between the result values at the nth shot and the mth shot, and the allowable range, to the output unit 96. A user of the injection molding machine who views the image can understand a deterioration degree of the management part, or the like.

Moreover, the controller 90 may output an image (for example, the image shown in Fig. 3) showing the relationship between the result value of the physical quantity indicating the load applied to the management part and the allowable range to the output unit 96. The image shown in Fig. 3 and the image shown in Fig. 4 maybe simultaneously displayed, and may be separately displayed from each other.

The controller 90 may send a total value and/or notification based on the total value to a management server 98 via the network 97. In this case, the controller 90 causes the difference between the result values at the nth shot and the mth shot and/or notification based on the difference, an identification number of a management part, and an identification number of the injection molding machine to be associated with each other, and sends the association to the management server 98. Similarly to the controller 90, the management server 98 includes a CPU, a recording medium, or the like.

The management server 98 receives the information sent from the controller 90. The management server 98 sends the received information to a receiving terminal 99, which is registered in advance, via the network 97. The receiving terminal 99 may be a stationary terminal such as computer or a mobile terminal such as a cellular phone. A user who uses the injection molding machine can reduce labors required to contact a manager who manages the injection molding machine . The manager performs preparation of the replacement part, arrangement of a repair worker, or the like, based on the information received by the receiving terminal 99.

In addition, the controller 90 may send information to the receiving terminal 99 which is registered in advance via the network 97 without through the management server 98.

Hereinbefore, the embodiment of the injection molding information management device is described.

## Claims

1. An injection moldinginformation management device (90) which manages information of a part of an injection molding machine,
**characterized in that** the injection molding information management device (90) is configured
- to calculate a difference between result values of a physical quantity indicating a load applied to the part at an nth shot, wherein n is a natural number of 2 or more, and an mth shot wherein m is a natural number which is obtained subtracting a predetermined positive natural number from n and is 1 or more, to determine whether or not the part is abnormal, and
- to calculate a difference between the result value and a reference value at the nth shot to determine whether or not the part is abnormal, in a cyclical operation in which a molding product is repeatedly manufactured under the same setting conditions, wherein said reference value is obtained by an endurance test of the part in advance
- to determine that severe abnormality is not present in a case where the degree of difference between the result value and the reference value is within an allowable range,
- to determine that severe abnormality is present in a case where the degree of difference between the result value and the reference value is not within the allowable range.

2. The injection molding information management device (90) according to claim 1,
wherein the physical quantity includes a controlled variable which is controlled by a controller (90) of the injection molding machine.

3. The injection molding information management device (90) according to claim 1 or 2,
wherein the physical quantity includes a manipulated variable which is used for operation by the controller (90) of the injection molding machine.

4. The injection molding information management device (90) according to any one of claims 1 to 3,
wherein the physical quantity includes at least one of a vibration amplitude, a vibration frequency, and a vibration acceleration.

5. The injection molding information management device (90) according to any one of claims 1 to 4,
wherein the physical quantity includes a balance between loads which are simultaneously applied to multiple parts which are symmetrically disposed.

6. The injection molding information management device (90) according to any one of claims 1 to 5,
wherein the physical quantity includes a balance between the loads applied to the part at an outgoing path and a return path.

7. The injection molding information management device (90) according to any one of claims 1 to 6,
wherein a notification based on the difference is output to the output unit (96).

8. An injection molding machine comprising an injection molding information management device (90) according to claim 1 which manages information of a part of an injection molding machine,
wherein the injection molding information management device (90) is configured to calculate a difference between result values of a physical quantity indicating a load applied to the part at an nth (n is a natural number of 2 or more) shot and an mth (m is a natural number which is obtained by subtracting a predetermined positive natural number from n and is 1 or more) shot, in a cyclical operation in which a molding product is repeatedly manufactured under the same setting conditions,
and wherein the difference and/or a notification based on the difference is sent to a management server (98).

9. An inj ectionmoldingmachine, according to claim 8 comprising:
a mold clamping unit (10) which performs mold-closing, mold-clamping, and mold-opening of a mold unit;
an injection unit (40) which fills the inside of the mold unit with a molding material; and
the injection molding information management device (90) according to any one of claims 1 to 8.

## Patentansprüche

1. Spritzgießinformationsverwaltungsvorrichtung (90), die Information eines Teils einer Spritzgießmaschine verwaltet,
**dadurch gekennzeichnet, dass** die Spritzgießinformationsverwaltungsvorrichtung (90) konfiguriert ist,
- um eine Differenz zwischen Ergebniswerten einer physikalischen Größe zu berechnen, die eine Belastung angibt, die auf das Teil bei einem n-ten Schuss ausgeübt wird, wobei n eine natürliche Zahl von 2 oder mehr ist, und bei einem m-ten Schuss, wobei m eine natürliche Zahl ist, die durch Subtrahieren einer vorbestimmten positiven natürlichen Zahl von n erhalten wird und 1 oder mehr ist,
um zu bestimmen, ob das Teil abnormal ist oder nicht, und
- um eine Differenz zwischen dem Ergebniswert und einen Referenzwert bei dem n-ten Schuss zu berechnen, um zu bestimmen, ob das Teil abnormal ist oder nicht, in einem Zyklusbetrieb, bei dem ein Formprodukt wiederholt unter denselben Einstellungsbedingungen hergestellt wird, wobei der Referenzwert durch einen Dauertest des Teils im Voraus erhalten wird,
- um zu bestimmen, dass starke Abnormalität nicht vorhanden ist in einem Fall, in dem der Grad der Differenz zwischen dem Ergebniswert und dem Referenzwert innerhalb eines zulässigen Bereichs liegt,
- um zu bestimmen, dass starke Abnormalität vorhanden ist in einem Fall, in dem der Grad der Differenz zwischen dem Ergebniswert und dem Referenzwert nicht innerhalb des zulässigen Bereichs liegt.

2. Spritzgießinformationsverwaltungsvorrichtung (90) nach Anspruch 1,
wobei die physikalische Größe eine Regelgröße umfasst, die von einem Kontroller (90) der Spritzgießmaschine geregelt wird.

3. Spritzgießinformationsverwaltungsvorrichtung (90) nach Anspruch 1 oder 2,
wobei die physikalische Größe eine Stellgröße umfasst, die für den Betrieb durch den Kontroller (90) der Spritzgießmaschine eingesetzt wird.

4. Spritzgießinformationsverwaltungsvorrichtung (90) nach einem der Ansprüche 1 bis 3,
wobei die physikalische Größe mindestens eins von einer Schwingungsamplitude, einer Schwingungsfrequenz und einer Schwingungsbeschleunigung umfasst.

5. Spritzgießinformationsverwaltungsvorrichtung (90) nach einem der Ansprüche 1 bis 4,
wobei die physikalische Größe ein Gleichgewicht zwischen Belastungen umfasst, die gleichzeitig auf mehrere, symmetrisch angeordnete Teile ausgeübt werden.

6. Spritzgießinformationsverwaltungsvorrichtung (90) nach einem der Ansprüche 1 bis 5,
wobei die physikalische Größe ein Gleichgewicht zwischen den auf das Teil auf einem Ausgangspfad und einem Rücklaufpfad ausgeübten Belastungen umfasst.

7. Spritzgießinformationsverwaltungsvorrichtung (90) nach einem der Ansprüche 1 bis 6,
wobei eine auf der Differenz basierte Mitteilung an die Ausgabeeinheit (96) ausgegeben wird.

8. Spritzgießmaschine, umfassend eine Spritzgießinformationsverwaltungsvorrichtung (90) nach Anspruch 1, die Information eines Teils einer Spritzgießmaschine verwaltet,
wobei die Spritzgießinformationsverwaltungsvorrichtung (90) konfiguriert ist, um eine Differenz zwischen Ergebniswerten einer physikalischen Größe zu berechnen, die eine Belastung anzeigt, die auf das Teil bei einem n-ten Schuss (n ist eine natürliche Zahl von 2 oder mehr) und einem m-ten Schuss ausgeübt wird (m ist eine natürliche Zahl, die durch Subtrahieren einer vorbestimmten positiven natürlichen Zahl von n erhalten wird und 1 oder mehr ist), in einem Zyklusbetrieb, bei dem ein Formprodukt wiederholt unter denselben Einstellungsbedingungen hergestellt wird,
und wobei die Differenz und/oder eine auf der Differenz basierende Mitteilung an einen Verwaltungsserver (98) geschickt wird.

9. Spritzgießmaschine nach Anspruch 8, umfassend:
eine Formschließeinheit (10), die Formschließen, Formklemmen und Formöffnen einer Formeinheit durchführt;
eine Einspritzeinheit (40), welche das Innere der Formeinheit mit einem Formmaterial füllt; und
die Spritzgießinformationsverwaltungsvorrichtung (90) nach einem der Ansprüche 1 bis 8.

## Revendications

1. Un dispositif de gestion d'informations de moulage par injection (90) qui gère des informations d'une pièce d'une machine de moulage par injection,
**caractérisé en ce que** le dispositif de gestion d'informations de moulage par injection (90) est configuré
- pour calculer une différence entre des valeurs de résultat d'une quantité physique indiquant une charge appliquée à la pièce au moment d'une n^{ième} charge d'injection, dans lequel n est un entier naturel supérieur ou égal à 2, et d'une m^{ième} charge d'injection, dans lequel m est un entier naturel qui est obtenu en soustrayant un entier naturel positif prédéterminé de n et est égal ou supérieur à 1,
pour déterminer si la pièce présente une anomalie ou pas, et
- pour calculer une différence entre la valeur de résultat et une valeur de référence au moment de la n^{ième} charge d'injection pour déterminer si la pièce présente une anomalie ou pas, dans un fonctionnement cyclique dans lequel un produit de moulage est fabriqué de manière répétée dans les mêmes conditions de prise, dans lequel ladite valeur de référence est obtenue au moyen d'un test d'endurance de la pièce à l'avance
- pour déterminer qu'une anomalie grave n'est pas présente dans un cas où le degré de différence entre la valeur de résultat et la valeur de référence se situe au sein d'une plage admissible,
- pour déterminer qu'une anomalie grave est présente dans un cas où le degré de différence entre la valeur de résultat et la valeur de référence ne se situe pas au sein de la plage admissible.

2. Le dispositif de gestion d'informations de moulage par injection (90) selon la revendication 1,
dans lequel la quantité physique inclut une variable contrôlée qui est contrôlée par une unité de contrôle (90) de la machine de moulage par injection.

3. Le dispositif de gestion d'informations de moulage par injection (90) selon la revendication 1 ou 2,
dans lequel la quantité physique inclut une variable manipulée qui est utilisée pour le fonctionnement par l'unité de contrôle (90) de la machine de moulage par injection.

4. Le dispositif de gestion d'informations de moulage par injection (90) selon l'une quelconque des revendications 1 à 3,
dans lequel la quantité physique inclut au moins l'une d'une amplitude de vibration, d'une fréquence de vibration et d'une accélération de vibration.

5. Le dispositif de gestion d'informations de moulage par injection (90) selon l'une quelconque des revendications 1 à 4,
dans lequel la quantité physique inclut un équilibre entre des charges qui sont appliquées simultanément à des pièces multiples qui sont disposées de manière symétrique.

6. Le dispositif de gestion d'informations de moulage par injection (90) selon l'une quelconque des revendications 1 à 5,
dans lequel la quantité physique inclut un équilibre entre les charges appliquées à la pièce au niveau d'un trajet aller et d'un trajet retour.

7. Le dispositif de gestion d'informations de moulage par injection (90) selon l'une quelconque des revendications 1 à 6,
dans lequel une notification basée sur la différence est transmise à l'unité de sortie (96).

8. Une machine de moulage par injection comprenant un dispositif de gestion d'informations de moulage par injection (90) selon la revendication 1 qui gère des informations d'une pièce d'une machine de moulage par injection,
dans laquelle le dispositif de gestion d'informations de moulage par injection (90) est configuré pour calculer une différence entre des valeurs de résultat d'une quantité physique indiquant une charge appliquée à la pièce au moment d'une n^{ième} (n est un entier naturel supérieur ou égal à 2) charge d'injection, et d'une m^{ième} (m est un entier naturel qui est obtenu en soustrayant un entier naturel positif prédéterminé de n et est supérieur ou égal à 1) charge d'injection, dans un fonctionnement cyclique dans lequel un produit de moulage est fabriqué de manière répétée dans les mêmes conditions de prise,
et dans laquelle la différence et/ou une notification basée sur la différence est envoyée à un serveur de gestion (98).

9. Une machine de moulage par injection, selon la revendication 8, comprenant :
une unité porte-moule (10) qui réalise la fermeture du moule, le serrage du moule et l'ouverture de moule d'une unité de moule ;
une unité d'injection (40) qui remplit l'intérieur de l'unité de moule avec un matériau de moulage ; et
le dispositif de gestion d'informations de moulage par injection (90) selon l'une quelconque des revendications 1 à 8.
